# EUROPÄISCHE PATENTSCHRIFT

(11) **EP 2 954 771 B1**
(45) Veröffentlichungstag und Bekanntmachung des Hinweises auf die Patenterteilung: **30.08.2017**
(21) Anmeldenummer: 15160432.9
(22) Anmeldetag: 24.03.2015
(51) Int. Cl.: A01D 61/04

(54) **Förderkette**
Conveyor chain
Chaîne de transport

(30) Priorität: 12.06.2014 DE 102014108288
(43) Veröffentlichungstag der Anmeldung: 16.12.2015
(73) Patentinhaber: CLAAS Selbstfahrende Erntemaschinen GmbH, 33428 Harsewinkel (DE)
(72) Erfinder: Kortenjann, Ludger, 48231 Warendorf (DE); Brand, Andreas, 33428 Marienfeld (DE); Burbank, Martin, 48231 Warendorf (DE)
(74) Vertreter: Budach, Steffen

(56) Entgegenhaltungen:
- EP-A1- 0 891 696
- EP-A1- 2 721 917
- DE-A1- 19 830 381
- US-A- 3 780 851
- US-A- 3 967 719

## Beschreibung

Die vorliegende Erfindung betrifft eine Förderkette für einen Kettenförderer gemäß dem Oberbegriff des Anspruches 1. Weiterhin betrifft die Erfindung eine Erntegutfördervorrichtung für einen Mähdrescher gemäß Anspruch 12 sowie einen Mähdrescher gemäß dem Anspruch 13.

Förderketten eines Kettenförderers unterliegen im Bereich der an der Förderkette angebrachten Förderleisten einem starken Verschleiß. Dieser Verschleiß resultiert aus Hebelmomenten, die von den Förderleisten auf die Förderkette beim Fördern von Erntegut in einer Erntegutfördervorrichtung aufgebracht werden.

Aus der DE 198 30 381 A1 ist eine Förderkette gemäß dem Oberbegriff des Anspruches 1 bekannt, die sich mit dieser Thematik beschäftigt. Darin ist eine Förderkette für einen Kettenförderer beschrieben, die aus gelenkig zusammengesetzten, mit aus abwechselnd paarweise angeordneten Außenlaschen und Innenlaschen gebildeten Kettengliedern besteht, an denen beabstandet zueinander sich quer zu den Kettengliedern erstreckende, in einer Ebene liegende Förderleisten angeordnet sind. Jedes Kettenglied, welches eine Förderleiste trägt, ist als Außenlasche ausgeführt und verfügt über einen Stützabschnitt, der sich am nachfolgenden Kettenglied, welches von zwei Innenlaschen gebildet ist, außenseitig abstützt. Als nachteilig an dieser Förderkette hat sich gezeigt, dass sich der Stützabschnitt auf den nachfolgenden Innenlaschen abstützt, wodurch relativ große Kräfte in das Kettenglied mit Stützabschnitt eingeleitet werden. Des Weiteren weisen die Kettenglieder, welche die Förderleiste tragen und den Stützabschnitt aufweisen, einen komplexen Aufbau auf, da zusätzlich Mittel vorgesehen sein müssen, um die Förderleiste an diesen zu befestigen. Im einfachsten Fall schlägt die DE 198 30 381 A1 vor, die Förderleisten mit den Kettengliedern durch Verschweißen zu verbinden. Dies führt jedoch dazu, dass bei einem Austausch der Förderkette auch alle Förderleisten ersetzt werden beziehungsweise der Austausch einzelner Förderleisten nicht möglich ist, ohne auch die Förderkette auszutauschen.

Der Erfindung liegt somit die Aufgabe zu Grunde, eine Förderkette derart weiterzubilden, dass auf Kettenglieder im Bereich der Förderleisten einwirkende Kräfte reduziert werden.

Diese Aufgabe wird erfindungsgemäß durch die kennzeichnenden Merkmale des Anspruches 1 gelöst.

Vorteilhafte Weiterbildungen der Erfindung sind Gegenstand der Unteransprüche.

Gemäß dem kennzeichnenden Teil des Anspruches 1 wird vorgeschlagen, zumindest ein Stützelement an der der Kette zugewandten Seite der jeweiligen Förderleiste angeordnet ist, welches sich an einem nachfolgenden Kettenglied obenseitig abstützt. Die Anordnung des Stützelementes unmittelbar an der Förderleiste hat den Vorteil, dass der Verschleiß an der Stelle der Förderkette gemindert wird, an der dieser auftritt. Zudem lässt sich das Stützelement auf einfache Weise nachrüsten, indem es zusätzlich an der Förderleiste montiert wird.

Vorteilhafterweise kann dass sich das Stützelement zumindest abschnittsweise parallel zu den Kettengliedern erstrecken. Auf diese Weise lässt es sich gut in den endlosen Umlauf der Förderkette integrieren.

Zur lösbaren Befestigung der Förderleisten an der Förderkette können Befestigungselemente vorgesehen sein. Die lösbare Anbringung der Förderleiste an der Förderkette erlaubt den Austausch einzelner Förderleisten beziehungsweise den Austausch nur der Förderkette. Die Befestigungselemente können vorzugsweise an den Stellen der Förderkette als Kettenglieder in diese integriert sein, an denen die Anordnung einer Förderleiste vorgesehen ist. Hierzu ist eine paarweise spiegelbildliche Anordnung der Befestigungselemente vorgesehen.

Insbesondere kann das Stützelement ein im Wesentlichen U-förmiges Profil aufweisen, dessen parallele Schenkel benachbart zu dem als Außenlasche des Kettengliedes ausgeführten Befestigungselement angeordnet sind, an dem die Förderleiste angeordnet ist, während der quer verlaufende Schenkel des Stützelementes sich über die Innenlasche des nachfolgenden Kettengliedes erstreckt. Hieraus resultiert der Vorteil, dass auf einen zusätzlichen sich quer zur Förderkette erstreckenden Steg, wie er gemäß der DE 198 30 381 A1 erforderlich ist, verzichtet werden kann. Zudem erlaubt die vorliegende Lösung eine Nachrüstung einer konventionellen Förderkette, indem das Stützelement zusätzlich auf die Förderleiste aufgebracht wird. Die Förderkette gemäß der DE 198 30 381 A1 erlaubt keine Nachrüstung einer konventionell ausgeführten Förderkette.

Alternativ kann das Stützelement als eine Außenlasche der Förderkette ausgeführt sein, an welcher die Förderleiste angeordnet ist. Bei dieser alternativen Ausführungsform bilden zwei spiegelbildlich ausgeführte und angeordnete Stützelemente ein Kettenglied. Den spiegelbildlich ausgeführten und angeordneten Stützelementen kommen somit, neben dem abstützen, die zusätzlichen Funktionen zu, als ein Kettenglied zu fungieren und zugleich der Befestigung der Förderleiste an diesem zu dienen.

Hierzu kann das Stützelement ein abschnittsweise L-förmiges Profil aufweisen. Es korrespondiert damit in seiner Form mit der des Befestigungselementes, welches der Befestigung der Förderleiste dient, und ersetzt selbiges.

Das Stützelement kann einen ersten Schenkel aufweisen, welcher der Verbindung mit der Förderleiste dient. Hierzu kann der erste Schenkel eine Durchbohrung aufweisen, so dass die Förderleiste und das Stützelement durch eine Schraubverbindung miteinander verbindbar sind. Der erste Schenkel erstreckt sich zumindest abschnittsweise senkrecht zu den Innenlaschen der Kettenglieder.

Des Weiteren kann das Stützelement einen zweiten Schenkel aufweisen, welcher der Verbindung von unmittelbar zu dem Stützelement benachbarten Innenlaschen dient. Der zweite Schenkel ist unter einem Winkel zum ersten Schenkel geneigt angeordnet. Der zweite Schenkel erstreckt sich an einem Ende parallel zu einer Innenlasche und über die Länge des ersten Schenkels hinaus. Somit fungiert das Stützelement zusätzlich als Außenlasche und verbindet jeweils zwei Innenlaschen benachbarter Kettenglieder.

Insbesondere kann der zweite Schenkel in einen Stützabschnitt münden, der eine abschnittsweise an die Kontur einer nachfolgenden Außenlasche angepasste Form aufweist. Hierdurch ist ein partieller Formschluss zwischen dem als Außenlasche fungierenden Stützelement und der nachfolgenden Außenlasche gegeben, auf welcher sich das Stützelement obenseitig abstützt.

Weiterhin liegt der Erfindung die Aufgabe zugrunde, eine Erntegutfördervorrichtung sowie einen Mähdrescher mit einer Erntegutfördervorrichtung der eingangs genannten Art bereitzustellen, die eine höhere Standzeit aufweisen.

In Vorteilhafter Weiterbildung kann vorgesehen sein, dass jede Außenlasche der Förderkette einen Stützabschnitt aufweist, mit dem sich die jeweilige Außenlasche obenseitig an einer nachfolgenden Außenlasche beziehungsweise einem nachfolgenden Stützelement abstützt. Hierdurch lässt sich in der Kettenumlaufebene eine Stabilisierung der Förderkette erreichen, insbesondere kann dabei auf eine zusätzliche Stützwalze zwischen den Umlenkmitteln verzichtet werden.

Diese Aufgabe wird erfindungsgemäß durch die kennzeichnenden Merkmale der Ansprüche 12 und 13 gelöst.

Diese Aufgabe wird gemäß dem Anspruch 12 dadurch gelöst, dass eine Erntegutfördervorrichtung für einen Mähdrescher, umfassend ein Gehäuse, in welchem beabstandet zueinander Umlenkmittel angeordnet sind, die dem Antrieb von endlos umlaufenden, parallel zueinander angeordneten Förderketten dienen, vorgeschlagen wird, die dadurch gekennzeichnet ist, dass die Förderketten gemäß einem der Ansprüche 1 bis 11 ausgeführt sind. Die Umlenkmittel können als Umlenktrommel sowie als auf einer angetriebenen Welle angeordnete Kettenräder ausgeführt sein.

Weiterhin wird diese Aufgabe gemäß dem Anspruch 13 durch einen Mähdrescher gelöst, der dadurch gekennzeichnet ist, dass der Mähdrescher eine Erntegutfördervorrichtung nach Anspruch 12 mit einer Förderkette nach einem der Ansprüche 1 bis 11 umfasst.

Die vorliegende Erfindung wird nachfolgend anhand von in den Zeichnungen dargestellte Ausführungsbeispielen näher erläutert.

Es zeigen:
- Fig. 1: eine Seitenansicht eines selbstfahrenden Mähdreschers;
- Fig. 2: eine Erntegutfördervorrichtung in einer schematischen Längsschnittdarstellung;
- Fig. 3: eine erste Ausführungsform eines Stützelementes für eine Förderkette einer Erntegutfördereinrichtung;
- Fig. 4: eine Ansicht der ersten Ausführungsform des Stützelementes gemäß Fig. 3 in an der Förderkette montierter Position;
- Fig. 5: eine zweite Ausführungsform eines Stützelementes für eine Förderkette einer Erntegutfördereinrichtung.

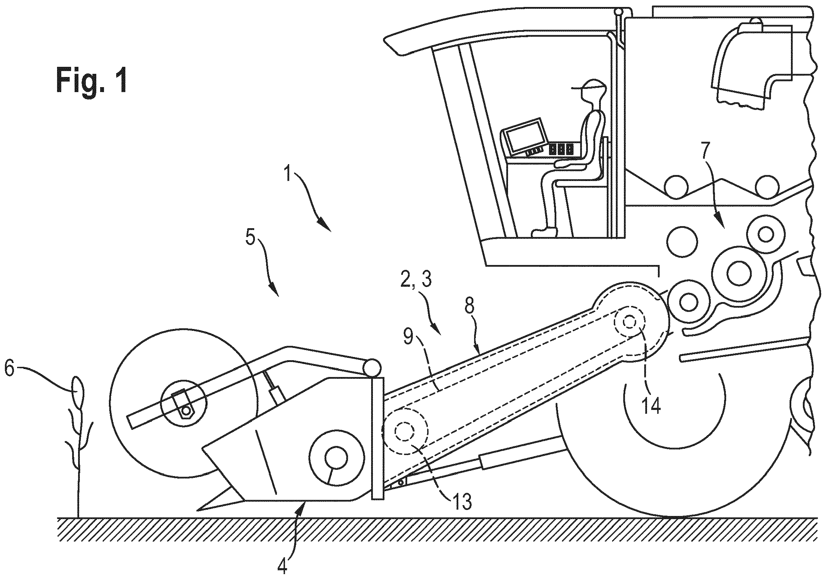

In Fig. 1 ist eine als selbstfahrender Mähdrescher 1 ausgeführte landwirtschaftliche Erntemaschine in der Seitenansicht dargestellt, an deren als Schrägförderer 2 ausgeführten Erntegutfördervorrichtung 3 ein als Schneidwerk 4 ausgeführtes Vorsatzgerät 5 angeordnet ist. Die Erntegutfördervorrichtung 3 fördert das von dem Schneidwerk 4 abgeschnittene Erntegut 6 unterschlächtig weiter zu einer Dreschvorrichtung 7.

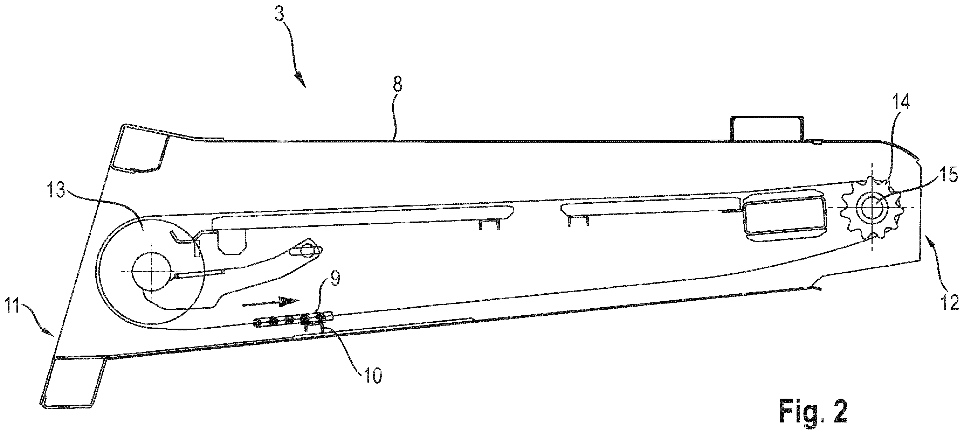

Die in Fig. 2 in schematischer Längsschnittdarstellung gezeigte Erntegutfördervorrichtung 3 besteht im Wesentlichen aus einem Förderergehäuse 8 und aus mehreren in Längsrichtung des Förderergehäuses 8 verlaufenden Förderketten 9, von denen nur eine dargestellt ist, zwischen denen in der Umlaufebene der Förderketten nach außen weisende Förderleisten 10 befestigt sind. Die Förderleisten 10 sind im vorliegenden Ausführungsbeispiel U-förmig profiliert ausgeführt. Das Förderergehäuse 8 weist gegenüber dem Schneidwerk 4 an der vorderen Seite eine Annahmeöffnung 11 und an der hinteren Seite eine an das Dreschwerk grenzende Abgabeöffnung 12 auf. Die umlaufenden Förderketten 9 werden auf einer unteren, im Bereich der Annahmeöffnung 11 angeordneten Umlenktrommel 13 und auf oberen, im Bereich der Abgabeöffnung 12 angeordneten Kettenrädern 14 geführt, die auf einer angetriebenen Welle 15 angeordnet sind.

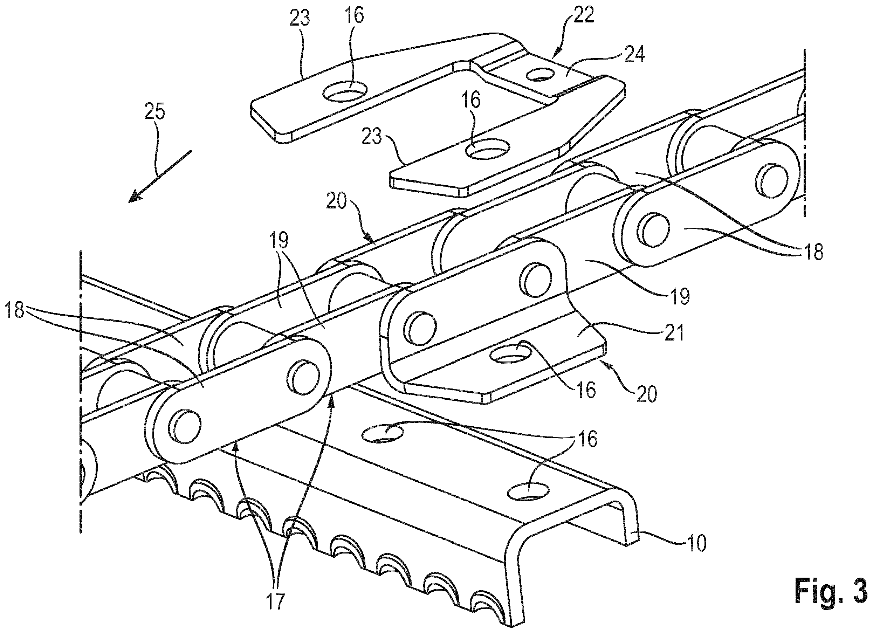

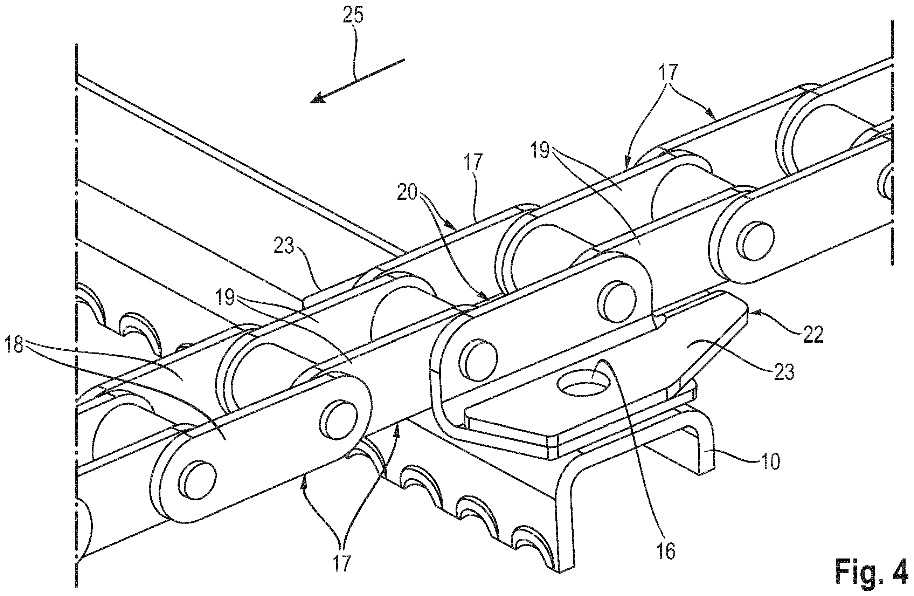

In Fig. 3 ist eine Explosionsansicht einer Förderkette 9 im Detail dargestellt. Fig. 4 zeigt eine Ansicht der ersten Ausführungsform des Stützelementes gemäß Fig. 3 in an der Förderkette montierter Position. Die jeweilige Ansicht in den Fig. 3 und 4 zeigt teilweise eine der Förderleisten 10, welche auf ihrer Oberfläche Durchbohrungen 16 aufweist. Weiterhin ist ein Teilabschnitt der Förderkette 9 dargestellt, welche aus einer Vielzahl von Kettengliedern 17 besteht, die aus abwechselnd paarweise parallel zueinander angeordneten Außenlaschen 18 und Innenlaschen 19 gebildet ist. Zur Befestigung der Förderleiste 10 an der Förderkette 9 sind in regelmäßigen Abständen als Außenlaschen ausgeführte Befestigungselemente 20 in paarweiser Anordnung vorgesehen. Die Befestigungselemente 20 sind im Wesentlichen L-förmig profiliert. Ein sich parallel zu der zu befestigenden Förderleiste 10 erstreckender Befestigungsabschnitt 21 ist mit einer Durchbohrung 16 versehen. Des Weiteren zeigt die Darstellung in Fig. 3 ein Stützelement 22, das ein im Wesentlichen U-förmiges Profil aufweist. Parallele Schenkel 23 des Stützelementes 22 sind ebenfalls mit Durchbohrungen 16 versehen. Ein quer verlaufender Schenkel 24 verbindet die parallelen Schenkel 23 des Stützelementes 22 miteinander. Mit dem Bezugszeichen 25 ist ein Pfeil bezeichnet, der die Umlaufrichtung der Förderkette 9 darstellt.

Wie aus der Darstellung in Fig. 4 ersichtlich, liegt das Stützelement 22 mit seinen parallelen Schenkeln 23 auf den Befestigungsabschnitten 21 der Befestigungselemente 20 auf. Die Durchbohrungen 16 der Förderleiste 10, der Befestigungselemente 20 sowie des Stützelementes 22 liegen übereinander und ermöglichen das Verschrauben dieser Teile miteinander durch nicht dargestellte Schrauben und Muttern. Der quer verlaufende Schenkel 24 des Stützelementes 22 stützt sich hingegen obenseitig auf den Innenlaschen 19 des nachfolgenden Kettengliedes 17 ab. Eine Kraft, die von der Förderleiste 10 auf Grund der Last bei der Förderung von Erntegut zu einer Drehung des Befestigungselementes 20 um den Lastangriffspunkt führen würde, wird durch das Stützelement 21 hinter dem Befestigungselement 20 in die Förderkette 9 eingeleitet. Die Kraft wird von dem Stützelement 21 auf das nachfolgende, von einem Paar Innenlaschen 19 gebildete Kettenglied 17 übertragen, wodurch die Belastung und somit der Verschleiß des Befestigungselementes 20 reduziert wird.

Die in den Fig. 3 und 4 dargestellte Ausführungsform des Stützelementes 22 hat den Vorteil, dass es an konventionellen Förderketten 9 nachrüstbar ist, indem es auf die bereits vorhandenen Befestigungsabschnitte 21 der Befestigungselemente 20 aufgesetzt und mit diesen verbunden wird. Eine Nachrüstung ist somit mit relativ geringem zeitlichem Aufwand realisierbar.

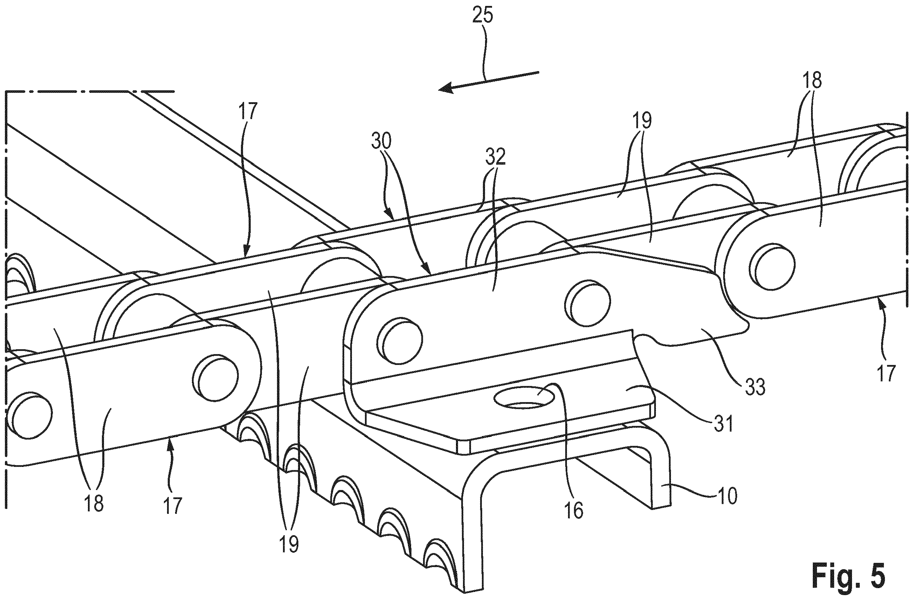

In Fig. 5 ist eine zweite Ausführungsform eines Stützelementes 30 für eine Förderkette 9 einer Erntegutfördereinrichtung 3 dargestellt. Die Förderkette 9 sowie die zugehörigen Förderleisten 10 unterscheiden sich nicht von denen des vorangehenden Ausführungsbeispieles, so dass im Wesentlichen die gleichen Bezugszeichen verwendet wurden. Im Gegensatz zu der ersten Ausführungsform wird gemäß der zweiten Ausführungsform vorgeschlagen, dass Stützelement 30 in die Förderkette 9 zu integrieren. Hierzu ist das Stützelement 30 derart ausgeführt, dass es paarweise angeordnet, zwei benachbarte Kettenglieder 17 entsprechend paarweise angeordnete Außenlaschen miteinander verbindet. Die jeweils paarweise spiegelbildlich angeordneten Stützelemente 30 sind identisch ausgeführt, so dass nachfolgend nur das in der Darstellung der Fig. 5 vollständig sichtbare Stützelement 30 beschrieben ist.

Das Stützelement 30 ist im Wesentlichen L-förmig ausgeführt und weist einen ersten Schenkel 31 auf, der der Verbindung mit der Förderleiste 10 dient. Der erste Schenkel 31 ist dazu mit einer Durchbohrung 16 versehen. Ein zweiter Schenkel 32 des Stützelementes 30, der unter einem Winkel zum ersten Stützschenkel 1 geneigt angeordnet ist, verbindet zwei benachbart angeordnete Innenlaschen 19 miteinander. Der zweite Schenkel 32 ist an einem Ende mit einem Stützabschnitt 33 versehen. Der Stützabschnitt 33 erstreckt sich über die Länge des ersten Schenkels 31 des Stützelementes 30 hinaus parallel zu der nachfolgenden Innenlaschen 19. Der Stützabschnitt 33 des Stützelementes 30 weist an seinem freien Ende eine nach innen gewölbte Kontur auf, die mit dem radialen Abschnitt der nachfolgenden Außenlasche 18 korrespondiert. Im Gegensatz zu dem als Nachrüstlösung ausgeführten Stützelement 21 stützen sich die paarweise in die Förderkette 9 integrierten Stützelemente 30 obenseitig jeweils an der nachfolgenden Außenlasche 18 ab. Das Stützelement 30 gemäß der zweiten Ausführungsform vereint in sich die Funktionen der Befestigung der Förderleiste, als ein benachbarte Kettenglieder verbindendes Kettenglied sowie als Stützelement.

**Bezugszeichenliste**

| | | | |
|---|---|---|---|
| **1** | Mähdrescher | **30** | Stützelement |
| **2** | Erntemaschine | **31** | Erster Schenkel des Stützelementes 30 |
| **3** | Erntegutfördereinrichtung | **32** | Zweiter Schenkel des Stützelementes 30 |
| **4** | Schneidwerk | **33** | Stützabschnitt |
| **5** | Vorsatzgerät | | |
| **6** | Erntegut | | |
| **7** | Dreschvorrichtung | | |
| **8** | Fördergehäuse | | |
| **9** | Förderkette | | |
| **10** | Förderleiste | | |
| **11** | Annahmeöffnung | | |
| **12** | Abgabeöffnung | | |
| **13** | Umlenktrommel | | |
| **14** | Kettenrad | | |
| **15** | Welle | | |
| **16** | Durchbohrung | | |
| **17** | Kettenglied | | |
| **18** | Außenlasche | | |
| **19** | Innenlasche | | |
| **20** | Befestigungselement | | |
| **21** | Befestigungsabschnitt | | |
| **22** | Stützelement | | |
| **23** | Paralleler Schenkel des Befestigungselementes 20 | | |
| **24** | Quer verlaufender Schenkel des Befestigungselementes 20 | | |
| **25** | Umlaufrichtung | | |

## Patentansprüche

1. Förderkette (9) für eine Erntegutfördereinrichtung (3), welche aus gelenkig zusammengesetzten, mit aus abwechselnd paarweise angeordneten Außenlaschen (18) und Innenlaschen (19) gebildeten Kettengliedern (17) besteht, an denen, beabstandet zueinander, sich quer zu den Kettengliedern (17) erstreckende Förderleisten (10) angeordnet sind, **dadurch gekennzeichnet, dass** zumindest ein Stützelement (22, 30) an der der Förderkette (9) zugewandten Seite der jeweiligen Förderleiste (10) angeordnet ist, welches sich an einem nachfolgenden Kettenglied (17) obenseitig abstützt.

2. Förderkette (9) nach Anspruch 1, **dadurch gekennzeichnet, dass** sich das Stützelement (22, 30) zumindest abschnittsweise parallel zu den Kettengliedern (17) erstreckt.

3. Förderkette (9) nach einem der Ansprüche 1 oder 2, **dadurch gekennzeichnet, dass** die Förderleisten (10) mittels Befestigungselementen (20) lösbar an der Förderkette (9) angeordnet sind.

4. Förderkette (9) nach Anspruch 3, **dadurch gekennzeichnet, dass** das Stützelement (22) ein im Wesentlichen U-förmiges Profil aufweist, dessen parallele Schenkel (23) benachbart zu dem als Außenlasche (18) des Kettengliedes (17) ausgeführten Befestigungselement (20) angeordnet sind, an dem die Förderleiste (10) angeordnet ist, während der quer verlaufende Schenkel (24) des Stützelementes (22) sich über die Innenlaschen (19) des nachfolgenden Kettengliedes (17) erstreckt.

5. Förderkette (9) nach einem der Ansprüche 1 oder 2, **dadurch gekennzeichnet, dass** das Stützelement (30) als eine Außenlasche der Förderkette ausgeführt ist, an welchem die Förderleiste (9) angeordnet ist.

6. Förderkette (9) nach Anspruch 5, **dadurch gekennzeichnet, dass** das Stützelement (30) ein abschnittsweise L-förmiges Profil aufweist.

7. Förderkette (9) nach Anspruch 6, **dadurch gekennzeichnet, dass** das Stützelement (30) einen ersten Schenkel (31) aufweist, welcher der Verbindung mit der Förderleiste (10) dient.

8. Förderkette (9) nach einem der Ansprüche 6 oder 7, **dadurch gekennzeichnet, dass** das Stützelement (30) einen zweiten Schenkel (32) aufweist, welches der Verbindung von unmittelbar zu diesem benachbarten Innenlaschen (19) dient.

9. Förderkette (9) nach einem der Ansprüche 6 bis 8, **dadurch gekennzeichnet, dass** das Stützelement (30) einen Stützabschnitt (33) aufweist, mit dem sich das Stützelement (30) obenseitig an einer nachfolgenden Außenlasche (18) abstützt.

10. Förderkette (9) nach Anspruch 9, **dadurch gekennzeichnet, dass** der zweite Schenkel (32) in einen Stützabschnitt (33) mündet, der eine abschnittsweise an die Kontur einer nachfolgenden Außenlasche (18) angepasste Form aufweist.

11. Förderkette (9) nach einem der Ansprüche 1 bis 10, **dadurch gekennzeichnet, dass** jede Außenlasche (18) der Förderkette (9) einen Stützabschnitt (33) aufweist, mit dem sich die Außenlasche (18) obenseitig an einer nachfolgenden Außenlasche (18) beziehungsweise einem Stützelement (30) abstützt.

12. Erntegutfördereinrichtung (3) für einen Mähdrescher (1), umfassend ein Fördergehäuse (8), in welchem beabstandet zueinander Umlenkmittel (12, 13, 14) angeordnet sind, die dem Antrieb von endlos umlaufenden, parallel zueinander angeordneten Förderketten (9) dienen, **dadurch gekennzeichnet, dass** die Förderketten (9) gemäß einem der Ansprüche 1 bis 11 ausgeführt sind.

13. Mähdrescher (1), **dadurch gekennzeichnet, dass** der Mähdrescher (1) eine Erntegutfördereinrichtung (3) nach Anspruch 12 mit einer Förderkette (3) nach einem der Ansprüche 1 bis 11 umfasst.

## Claims

1. A conveyor chain (9) for a crop material conveyor device (3), which comprises hingedly interconnected chain links (17) which are formed from outer plates (18) and inner plates (19) arranged alternately in pairs and on which are arranged in mutually spaced relationship conveyor bars (10) extending transversely relative to the chain links (17), **characterised in that** at least one support element (22, 30) is arranged at the side of the respective conveyor bar (10), that is towards the conveyor chain (9), the support element being supported at the top side on a following chain link (17).

2. A conveyor chain (9) according to claim 1 **characterised in that** the support element (22, 30) extends at least portion-wise parallel to the chain links (17).

3. A conveyor chain (9) according to one of claims 1 and 2 **characterised in that** the conveyor bars (10) are arranged releasably on the conveyor chain (9) by means of fixing elements (20).

4. A conveyor chain (9) according to claim 3 **characterised in that** the support element (22) is of a substantially U-shaped profile whose parallel limbs (23) are arranged adjacent to the fixing element (20) in the form of an outer plate (18) of the chain link (17), on which the conveyor bar (10) is arranged, while the transversely extending limb (24) of the support element (22) extends over the inner plates (19) of the following chain link (17).

5. A conveyor chain (9) according to one of claims 1 and 2 **characterised in that** the support element (30) is in the form of an outer plate of the conveyor chain, at which the conveyor bar (10) is arranged.

6. A conveyor chain (9) according to claim 5 **characterised in that** the support element (30) is of a portion-wise L-shaped profile.

7. A conveyor chain (9) according to claim 6 **characterised in that** the support element (30) has a first limb (31) which serves for connection to the conveyor bar (10).

8. A conveyor chain (9) according to one of claims 6 and 7 **characterised in that** the support element (30) has a second limb (32) which serves for the connection of inner plates (19) immediately adjacent thereto.

9. A conveyor chain (9) according to one of claims 6 to 8 **characterised in that** the support element (30) has a support portion (33) with which the support element (30) is supported at the top side on a following outer plate (18).

10. A conveyor chain (9) according to claim 9 **characterised in that** the second limb (32) opens into a support portion (33) which is of a shape which is portion-wise adapted to the contour of a following outer plate (18).

11. A conveyor chain (9) according to one of claims 1 to 10 **characterised in that** each outer plate (18) of the conveyor chain (9) has a support portion (33) with which the outer plate (18) is supported at the top side on a following outer plate (18) or a support element (30) respectively.

12. A crop material conveyor device (3) for a combine harvester (1), including a conveyor housing (8) in which are arranged in mutually spaced relationship direction-changing means (12, 13, 14) which serve for the drive of endlessly circulating conveyor chains (9) arranged parallel to each other, **characterised in that** the conveyor chains (9) are in accordance with one of claims 1 to 11.

13. A combine harvester (1) **characterised in that** the combine harvester (1) includes a crop material conveyor device (3) according to claim 12 having a conveyor chain (3) according to one of claims 1 to 11.

## Revendications

1. Chaîne d'alimentation (9) pour un équipement d'alimentation en produit récolté (3), lequel se compose de maillons de chaîne (17) qui sont assemblés de manière articulée et formés d'éclisses extérieures (18) et d'éclisses intérieures (19) disposées par paires en alternance et sur lesquels sont disposées des barrettes d'alimentation (10) distantes les unes des autres et transversales aux maillons de chaîne (17), **caractérisée en ce que** sur le côté de chaque barrette de convoyeur (10) tourné vers la chaîne d'alimentation (9) est disposé un élément d'appui (22, 30) qui, en partie haute, prend appui sur un maillon de chaîne (17) suivant.

2. Chaîne d'alimentation (9) selon la revendication 1, **caractérisée en ce que**, au moins par endroits, l'élément d'appui (22, 30) s'étend parallèlement aux maillons de chaîne (17).

3. Chaîne d'alimentation (9) selon une des revendications 1 ou 2, **caractérisée en ce que** les barrettes de convoyeur (10) sont disposées sur la chaîne d'alimentation (9) de manière amovible au moyen d'éléments de fixation (20).

4. Chaîne d'alimentation (9) selon la revendication 3, **caractérisée en ce que** l'élément d'appui (22) présente un profil sensiblement en forme de U dont les branches parallèles (23) sont disposées au voisinage de l'élément de fixation (20) qui est conformé en éclisse extérieure (18) du maillon de chaîne (17) et sur lequel la barrette de convoyeur (10) est disposée, tandis que la branche (24) de l'élément d'appui (22) s'étendant transversalement s'étend sur les éclisses intérieures (19) du maillon de chaîne (17) suivant.

5. Chaîne d'alimentation (9) selon une des revendications 1 ou 2, **caractérisée en ce que** l'élément d'appui (30) est conformé en éclisse extérieure de la chaîne d'alimentation, sur laquelle est disposée la barrette de convoyeur (9).

6. Chaîne d'alimentation (9) selon la revendication 5, **caractérisée en ce que** l'élément d'appui (30) présente un profil par endroits en forme de L.

7. Chaîne d'alimentation (9) selon la revendication 6, **caractérisée en ce que** l'élément d'appui (30) comporte une première branche (31) qui sert à la liaison avec la barrette de convoyeur (10).

8. Chaîne d'alimentation (9) selon une des revendications 6 ou 7, **caractérisée en ce que** l'élément d'appui (30) comporte une seconde branche (32) qui sert à la liaison d'éclisses intérieures (19) situées au voisinage immédiat de celle-ci.

9. Chaîne d'alimentation (9) selon une des revendications 6 à 8, **caractérisée en ce que** l'élément d'appui (30) comporte une portion d'appui (33) par laquelle l'élément d'appui (30) prend appui, en partie haute, sur une éclisse extérieure (18) suivante.

10. Chaîne d'alimentation (9) selon la revendication 9, **caractérisée en ce que** la seconde branche (32) se prolonge par une portion d'appui (33) qui présente une forme adaptée par endroits au contour d'une éclisse extérieure (18) suivante.

11. Chaîne d'alimentation (9) selon une des revendications 1 à 10, **caractérisée en ce que** chaque éclisse extérieure (18) de la chaîne d'alimentation (9) comporte une portion d'appui (33) par laquelle l'éclisse extérieure (18) prend appui en partie haute sur une éclisse extérieure (18) suivante, respectivement sur un élément d'appui (30).

12. Équipement d'alimentation en produit récolté (3), comprenant un carter d'alimentation (8) dans lequel sont disposés à distance l'un de l'autre des moyens déflecteurs (12, 13, 14) qui servent à entraîner des chaînes d'alimentation (9) à défilement continu disposées parallèlement l'une à l'autre, **caractérisé en ce que** les chaînes d'alimentation (9) sont conformées selon une des revendications 1 à 11.

13. Moissonneuse-batteuse (1), **caractérisée en ce que** la moissonneuse-batteuse (1) comprend un équipement d'alimentation en produit récolté (3) selon la revendication 12 avec une chaîne d'alimentation (3) selon une des revendications 1 à 11.
